Europäisches Patentamt

European Patent Office

Office européen des brevets

(11) Publication number: **0 046 381**
**B1**

(12) **EUROPEAN PATENT SPECIFICATION**

(45) Date of publication of patent specification: **13.11.85**

(51) Int. Cl.⁴: **G 01 L 5/10, G 01 L 1/12**

(21) Application number: **81303707.4**

(22) Date of filing: **14.08.81**

(54) Tension sensor.

(30) Priority: **18.08.80 JP 113899/80**

(43) Date of publication of application:
**24.02.82 Bulletin 82/08**

(45) Publication of the grant of the patent:
**13.11.85 Bulletin 85/46**

(84) Designated Contracting States:
**DE FR GB IT**

(56) References cited:
**FR-A-2 293 702**

**PATENTS ABSTRACTS OF JAPAN, vol.4, no.66, May 17, 1980, page 53 P 11
SOVIET INSTRUMENTATION AND CONTROL JOURNAL, no.8, August 1971, Oxford (GB), O.P. MIKHAILOV et al.: "A magneto-elastic transducer for small displacements", pages 45,46**

(73) Proprietor: **Matsushita Electric Industrial Co., Ltd.
1006, Oaza Kadoma
Kadoma-shi Osaka-fu, 571 (JP)**

(72) Inventor: **Yamashita, Ichiro
22-3, Otokoyamanagasawa Yawata-shi Kyoto-fu (JP)**
Inventor: **Ise, Yukihiko
3-10-27, Miyayamacho Toyonaka-shi Osaka-fu (JP)**

(74) Representative: **Crawford, Andrew Birkby et al
A.A. THORNTON & CO. Northumberland House
303-306 High Holborn
London WC1V 7LE (GB)**

Courier Press, Leamington Spa, England.

## Description

This invention relates to a tension sensor and, in particular, to a tension sensor for measuring tension of a magnetic tape running along a predetermined path.

In recent years, many kinds of instruments such as video tape recorders (VTR) and audio tape decks employing magnetic tape as a recording medium have widely been used. In these instruments, provision of a monitoring device to sense tape tension is indispensable for good quality reproduction.

As a means of measuring tape tension, devices of a mechanical type or force-displacement conversion type have so far generally been used, and particularly there has been employed a mechanism in which a tape guiding post is provided on one end of a rotatably supported arm and biased against the tape by a resilient body such as a spring or the like and the tape tension is measured by sensing rotational displacement of the arm caused by tape tension in opposition to the biasing force of the spring or the like.

However, the measurable range of such a device is limited by the kind of resilient body, and the size of the arm, and an effect due to a change of the measuring position with respect to the tape is often caused. In addition the device requires a wide space for displacement of the arm. Further, since there are many cases requiring conversion of such displacement into an electric signal, this increases the number of parts and causes an increase in cost as well as reduces the precision of the measurement.

These tension sensors are almost impossible to miniaturize and it is difficult to improve their performance. Thus, the development of a novel tension sensor is sought by those in the art at present.

Patent application FR—A—2 293 702 discloses apparatus for the measurement of tension of a band, which utilizes a plateform magnetostrictive element.

In "Patents Abstracts of Japan" vol. 4, No. 66, May 17, 1980, page 53P11 (Tokyo Denki Kagaku Kogyo K.K. (72) Kaneo Mouri (2)) there is disclosed a force-displacement transducer which utilizes a core of amorphous magnetostrictive material, with conductive coils being wound around the core. When an external force is applied to the core it is elastically deformed, and changes in the magnetic characteristics of the amorphous magnetostrictive material are detected by the conductive coils. The magnetic core, however, is supported at a peripheral part thereof. In such a supporting structure, it is inevitable that the magnetic circuit is largely affected by the magnetostriction due to the contact with the supporting member resulting in a decrease in the permeability of the magnetic core. Another disadvantage of the magnetostrictive core used in this force-displacement transducer is that deformation of the core due to an applied force is large because the core is supported only at one point. Such a large deformation results in inaccurate measurement. For example, where the tension in a band or tape is to be measured, the actual tension in the band or tape will be changed due to the displacement of the band or tape as a result of the large deformation of the magnetic core. Furthermore, due to the large deformation, the relationship between the tension and the stress caused thereby in the magnetic core is non-linear.

The present invention provides a tension sensor for measuring the tension of a tape-like or string-like object and having a magnetic core composed of a resilient and magnetostrictive amorphous alloy sheet forming a magnetic circuit and having a current-bearing sensing coil wound around said magnetic core, characterised in that said magnetic core is tubular in shape and supported by supporting means at both end portions thereof such that at least a part of said magnetic core is fixed to said support means, and said sensing coil is arranged such that magnetic flux generated therefrom is passed circumferentially through said magnetic core, and in that a part of the circumferential surface of said sheet forming the tubular magnetic core is exposed so that said tape-like or string-like object is in contact therewith.

An advantage of the present invention is that the deformation of the magnetic core during measurement is small due to its supporting structure. Therefore, a stress imparted in the core is linearly proportional to the tension to be measured.

A further advantage of the present invention is that the tension sensor is capable of accurately measuring tape tension over a wide range without inflicting disturbance to the movement of the tape.

In order that the present invention be more readily understood, an embodiment thereof will now be described by way of example with reference to the accompanying drawings, in which:—

Figure 1 is a perspective view of a basic form of tension sensor to assist understanding of the present invention;

Figures 2 to 4 are perspective views showing other basic forms of tension sensors;

Figure 5 is a perspective view of a tension sensor embodying this invention, including a partial sectional view thereof at one end;

Figure 6 is a view showing configuration of the tension sensor shown in Figure 5 and being in use for tension sensing;

Figure 7 is a diagram showing the relation between tension in the tape-shaped object to be measured and inductance;

Figure 8 is a diagrammatical view showing the structure of a tension sensor according to this invention when used for controlling tension in the tape of VTR; and

Figure 9 is a view showing an example of a tape tension control circuit to be used for the structure shown in Figure 8.

Recently, it has been made possible to mass-produce amorphous magnetic alloys at low cost using a super high speed cooling method. Such amorphous alloys are characterized by the fact that:

(1) they are excellent soft magnetic materials and capable of being made into materials having relative magnetic permeability ($\mu r$) amounting to 10,000 or more;

(2) a large saturation density can be assumed;

(3) high anti-corrosion property is ensured by addition of only a small quantity of Cr or the like;

(4) strength equal to that of piano wire can be obtained as shown in Table 1 and a thin film of similar strength need only be 20 $\mu$m or so thick;

TABLE 1

| Constituent | Tensile strength (kg/mm$^2$) |
|---|---|
| $Fe_{75}Si_{10}B_{12}$ | 340 |
| $Fe_{80}P_{13}C_7$ | 310 |
| $Fe_{72}Cr_8P_{13}C_7$ | 385 |

(5) the degree of dependency of magnetism upon temperature at room temperature or thereabout is low (changes at the rate of about 10% within the temperature range of $-10\sim50°C$); and

(6) a high magnetostrictive effect can be obtained from Fe amorphous magnetic material.

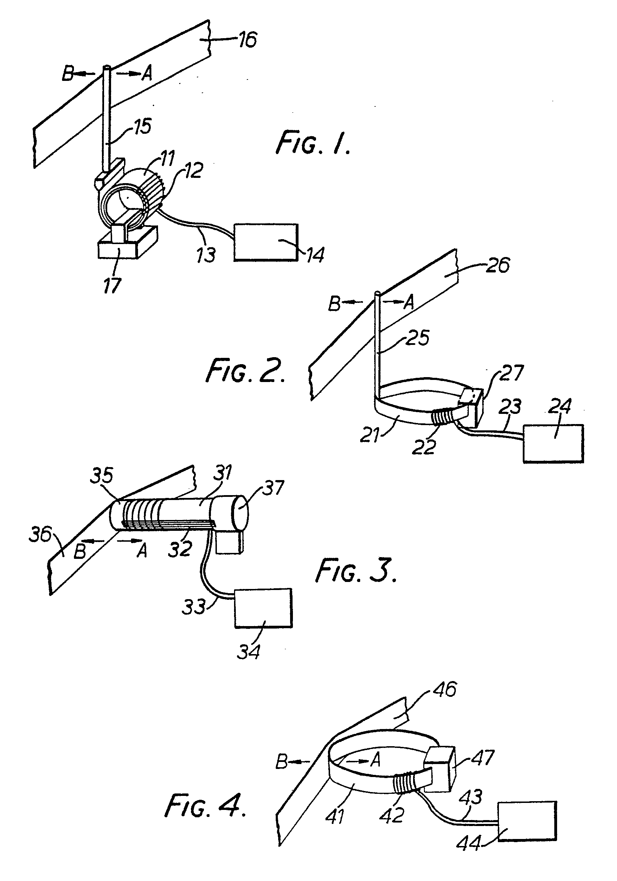

This invention utilizes the magnetostrictive effect of an amorphous magnetic alloy having excellent characteristic as described above for the tension sensor. Before describing in detail an embodiment of the present invention it is considered useful to describe basic forms of tension sensors as shown in Figs. 1—4 which do not constitute embodiments of the present invention.

Figure 1 shows a basic structure for a tension sensor in which a thin strip 11 of an amorphous magnetic alloy having a high magnetostrictive effect, wound in the form of spiral, and has one end retained at the center of spiral by a retainer 17 with the other end connected to a shaft 15 in engagement with a magnetic tape 16. As a result of such arrangement, the excellent springy resiliency of the alloy is well utilized to transmit tension in the magnet tape 16 to the coiled strip of amorphous magnetic alloy. A coil 12 is wound around the coiled strip 11 of the amorphous magnetic alloy so as not to hamper the motion of said strip. A lead wire 13 extends from the coil 12 and is connected to an inductance measuring circuit 14.

When the retainer 17 is positioned so that the tension transmitting shaft 15 is brought into contact with the tape 16, which is under a certain degree of tension, the tension transmitting shaft 15 tends to be displaced by the tape 16 in the direction shown by the arrow A in the drawing. However, the resilience of the coiled strip of amorphous magnetic alloy tends to move the shaft in the direction shown by the arrow B. Displacement of the tension transmitting shaft 15 is stopped when the two forces are in equilibrium. At this time, internal stress in the amorphous magnetic alloy 11 varies corresponding to displacement of the tension transmitting shaft 15. Since the amorphous magnetic alloy has a magnetostrictive effect, the variation in stress is transformed into variation in inductance. In this way, tension in the tape 16 is sensed.

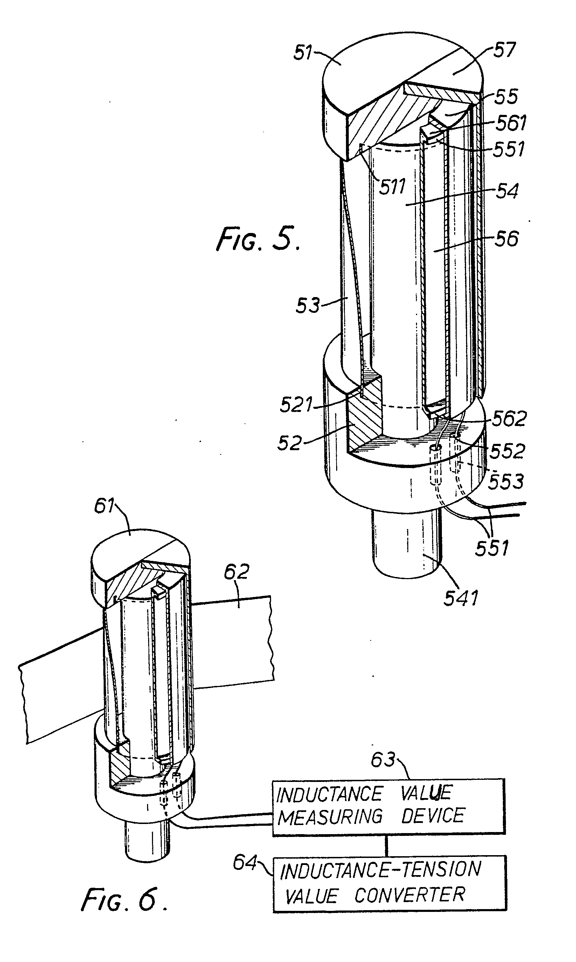

Figure 2 shows another basic type of tension sensor wherein the numeral 21 indicates a thin belt of amorphous magnetic alloy having a magnetostrictive effect and sufficient springy resilience, configured into a closed loop, and retained at one end thereof by a retainer 27. A coil 22 is wound around the magnetic core made of the loop 21 of amorphous magnetic alloy so as not to hamper the motion of said loop. A lead wire 23 connects the loop to the inductance measuring circuit 24.

When the retainer 26 is positioned so that a tension transmitting shaft 25 is brought into contact with a magnetic tape 26 which is under a certain degree of tension, the tension transmitting shaft 25 tends to be displaced by the tape 26 in the direction shown by the arrow A, and a restoring force due to the springy resilience of the amorphous magnetic alloy acts in the direction of the arrow B. Therefore, displacement of the tension transmitting shaft is stopped where the two forces are in equilibrium. At this time, internal stress in the amorphous magnetic alloy varies corresponding to the displacement of the tension transmitting shaft 25 and is sensed as a variation in inductance due to the magnetostrictive effect of the alloy used for the loop 21.

Parts other than those to which tension in the amorphous magnetic alloy 21 is transmitted may be constructed using another magnetic substance in place of the amorphous magnetic alloy so as to compose a magnetic circuit.

In the above-described tension sensors, appropriate selection of the length of tension transmitting shaft makes it possible to respond to variety in the degree of tension to be measured. The use of material excellent in wear-resistance for the tension transmitting shaft ensures long life of the arrangement.

Figure 3 shows a third basic tension sensor wherein the numeral 31 indicates a thin strip of amorphous magnetic alloy having magnetostrictive effect, spirally wound to form a conical helix, and having one end thereof retained to be fixed to the retainer 37. To the other end, a tape-contacting tension transmitter 35 made of highly wear-resistant material is fixed. The resultant construction is resilient both circumferentially as well as axially. A coil 32 is wound around the magnetic core formed by the helix of the amorphous magnetic alloy so as not to hamper the motion of the helix. A lead wire 33 connects the helix to an inductance measuring circuit 34.

When the magnetic tape 36 is under a certain degree of tension and the retainer 37 is positioned so that the tip of tension transmitter 35 is brought into contact with the tape, the helix is deformed by the force applied thereto and the tension transmitter 35 tends to be displaced in the direction shown by the arrow 'A' in the drawing, however, due to the resilience of the alloy forming the helix, a restoring force tends to thrust the transmitter in the direction shown by the arrow 'B'. Displacement is stopped when the forces are in equilibrium. At this time, the internal stress in the amorphous magnetic alloy is a function of the displacement of the tape contacting part. Since the amorphous magnetic alloy has a magnetostrictive effect, variation in stress can be taken out as variation in inductance.

Appropriate selection of the material used for the tape contacting part makes it possible to obtain a highly wear-resistant tension transmitter which will also not wear the tapes. Also, since only a small number of component parts are required the device can be compactly fabricated.

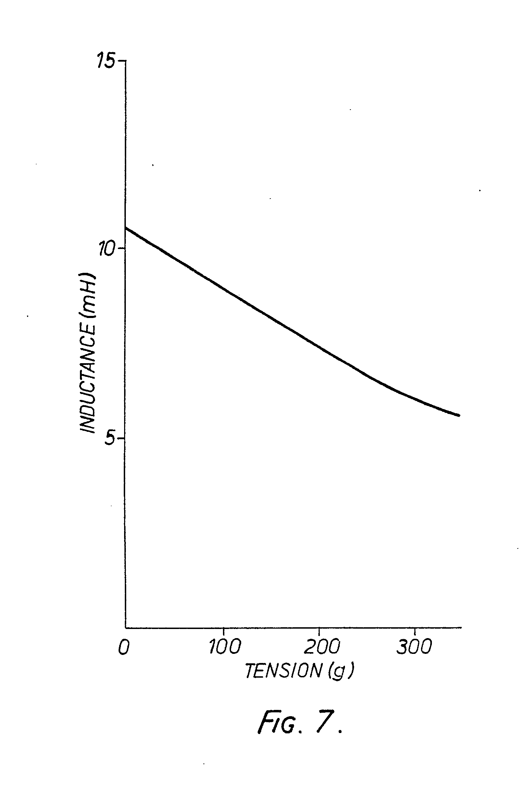

Figure 4 shows another basic structure for a tension sensor. As shown in the drawing, a ring 41 of amorphous magnetic alloy having a magnetostrictive effect is put into direct contact with the tape 46. A coil 42 is wound around the ring of the amorphous magnetic alloy so as not to hamper the motion of the ring 41. A lead wire 43 connects the ring to the inductance measuring circuit 44. The numeral 47 represents a retainer for fixedly retaining the ring 41 of the amorphous magnet alloy.

When the tape 46 is under a certain degree of tension and the retainer 47 is positioned so that the amorphous magnet alloy 41 is brought into contact with the tape 46, said ring 41 tends to be deformed but the springy resilience thereof tends to thrust the tape 46 back. Deformation stops when the two forces are in equilibrium. As a result, internal stress is generated within the amorphous magnet alloy due to deformation of the ring. Since the amorphous magnetic alloy has a magnetostrictive effect as described earlier, variation in stress can be picked off as variation in inductance.

The small number of component parts required is an advantage and a tension sensor can be fabricated compactly.

In the above four tension sensors, the structure is designed to utilize springy resilience of the amorphous magnetic alloy, thereby requiring only a small number of component parts which leads to simplicity of construction. Amorphous magnetic alloy is suitable for mass-production, inexpensive, and readily available, and provides a low-cost tension sensor. Further, the excellent magnetic and mechanical properties of the amorphous magnetic alloy can be utilized, enabling a high output, durability in the presence of an excessively high input, and low degree of temperature-dependency with high reliability.

Figure 5 shows an embodiment of this invention as a modification of the tension sensor shown in Figure 4. The numerals 51 and 52 indicate supporting parts provided with grooves 511 and 521, respectively, for retaining a tube 53 of amorphous magnetic alloy. The upper supporting part 51 is semi-circular and fixed to the end of a central column 54. The groove 511 is engraved adjacent the semi-circular periphery of the part 51. The lower supporting part 52 is a collar which is also fixed to the central column 54. The part 52 has a semi-circular portion, corresponding to the upper supporting part 51, which extends axially towards the upper part 51 and the groove 521 is engraved on this semi-circular portion so as to correspond to the groove 511. The tube of amorphous magnetic alloy is cut from a sheet into a piece of appropriate size and is bent into a cylindrical shape by appropriate heat treatment until it will fit into the above said grooves 511 and 521. The tube is finally fixed to these grooves by adhesion. A former 56 is disposed between the column 54 and the tube 53 and an exciting coil 55 is wound around the former 56 in the vertical direction. The former 56 is made up so as to be provided with flanges 561 and 562 to define a gap through which the tube of amorphous magnetic alloy passes. Terminals 551 of the coil are passed through terminal-fixing holes 552 and fixed by filling agent 553 so that no external force is exerted upon the amorphous magnetic alloy through the coil or the former. The coil is protected from external influence by a cover 57 fixed to the upper supporting part 51. The whole assembly can be located by the extension 541 of the central column 54.

Figure 6 shows how the structure shown in Figure 5 is put into practical operation. Stress is applied to the tension sensor 61 by the tape whose tension is to be measured. The inductance value of the tension sensor 61 varies and is measured as a tension value by the inductance value measuring device 63 and the inductance-tension value converter 64.

In this embodiment, since the amorphous magnetic alloy is formed into a cylindrical tube by heat treatment so as to fit into the upper and the lower grooves, tight fixing of the amorphous magnetic alloy is made possible without applying useless stress thereto. Consequently, the amorphous magnetic alloy can be set up under a state of almost no initial stress and, therefore, a highly sensitive tension sensor in which the inductance value varies over a wide range can be obtained. This sensor requires very small displacements and less disturbance to the object to be measured. Furthermore, the use of an amorphous magnetic alloy which is very resilient enables insertion of said sheet forming the tube 53 into the gap between the coil 55 and the former 56 after winding the coil 55 around the former 56, which eliminates the need for toroidal winding, facilitates cost saving, reduces the number of component parts as a whole, saves the number and cost of materials, simplifies the process, and can provide inexpensive sensors. As with each of the tension sensors shown in Figures 1 to 4, the excellent magnetic and mechanical properties of the amorphous magnetic alloy produce a tension sensor which is durable to excessive input, highly reliable, and low in temperature-dependency.

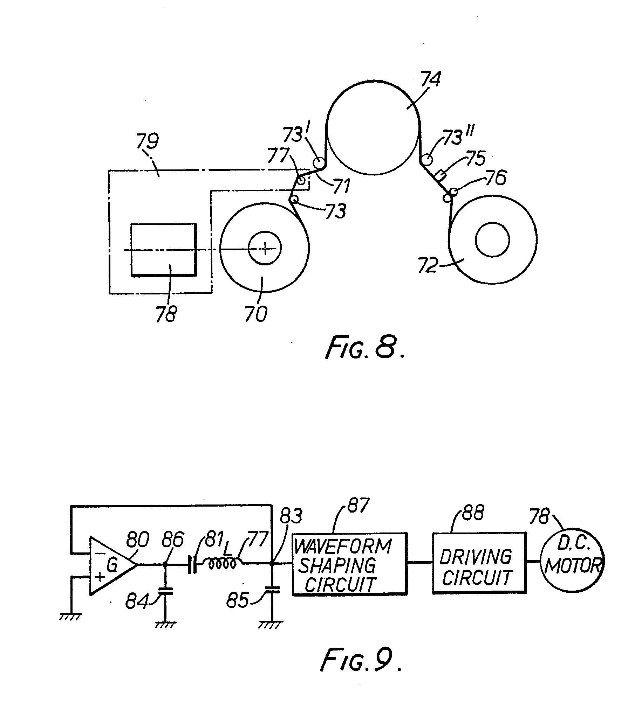

Figure 7 shows the relationship between tape tension and inductance when the tension sensor in a structure such as is shown in Figure 6 is used under conditions shown in Table 2.

From Figure 7, it is understood that since inductance decreases in proportion to variation in tape tension and at large variation rates, the tape tension can be measured with high precision and sensitivity.

TABLE 2

| Winding angle of tape | 90° |
|---|---|
| Material of amorphous sheet | $(Fe\ 0.95\ Cr\ 0.05)_{79}Si_{12.5}B_{8.5}$ |
| Thickness of amorphous sheet | 40 μm · |
| Height of amorphous sheet | 20 mm |
| Dia. of wound amorphous sheet | 4.8 mm |
| Number of turns of exciting coil | 200 |
| Dia. of exciting coil | 40 μm |
| Power source | Voltage (5 V)<br>Current (2 mA)<br>Frequency (20 KHz) |

Figure 8 shows a case in which a tension sensor according to this invention is used for controlling tape tension in a VTR. In Figure 8, the VTR comprises a feed reel 70 for feeding magnetic tape 71 and a take-up reel 72 for winding up said tape 71. The magnetic tape fed from the feed reel 70 is guided around the guide drum 74 for 180° of the drum circumference by guide posts 73 and 73', and then wound around the take-up reel 72 via guide post 73'', and an audio-control head 75. A capstan 76 draws out the tape from the feed reel 70. A tension sensor 77 e.g. that shown in Figure 6, is disposed to be in contact with the magnetic tape 71. A motor 78 is arranged to be driven so as to rotate the feed reel in the direction to wind up the magnet tape and so keep the tape 71 under tension. The capstan 76 draws out the magnet tape from the feed reel in opposition to rotating force of the motor 78. A block 79 shown by the alternate long and short dash line is a control circuit for controlling tension in the magnetic tape, and the block 79 is shown in more detail in Figure 9. In this drawing, a differential amplifier 80 has its output connected to the junction 86 between two capacitors 81, 84. The capacitor 84 has its other terminal earthed and the other terminal of the capacitor 81 is connected to one terminal of the tension sensor 77 (indicated as L representing reactance). The other terminal of the sensor 77 is connected at point 83 to one side of a capacitor 85 whose other side is earthed and the output of the sensor 77 is also fed back to the negating input of the differential amplifier 80 to form an oscillation circuit. The oscillation frequency generated by this circuit varies corresponding to the inducatance variation caused by tape tension applied to the tension sensor 77. A waveform shaping circuit 87 transforms the sinusoidal wave generated by the oscillation circuit into a pulse train which is fed to a driving circuit 88 for driving a D.C. motor which imparts rotational force in the direction of winding up the magnetic tape on the feed reel 70. The D.C. voltage output from the driving circuit 88 to the motor 78 corresponds to the frequency of the output from the waveform shaping circuit 87. In the above structure, for example, when the tension in the magnet tape to be sensed by the tension sensor 77 decreases, inductance of the tension sensor decreases and, therefore, the oscillation frequency of the oscillation circuit increases. Consequently, the driving power of the D.C. motor 78 increases and the magnetic tape is subjected to control so that tension therein is increased. When tension in the magnet tape is increased, inductance in the tension sensor 77 is conversely decreased and oscillation frequency in the oscillation circuit decreases, whereby driving power of the D.C. motor as well as tension in the magnetic tape is weakened. In this way, tension in the magnetic tape is maintained constant all the time.

In the above example, the description was made for the case where the tension sensor is used for maintaining constant tension in the magnetic tape. However, in the other cases such as occurrence of abnormal tension in the magnetic tape for some reason, the tension sensor can also be used for sensing such abnormal tension and controlling the capstan to stop running of the magnetic tape and thus prevent damage to the magnetic tape.

The advantages of the embodiment described above are retained even when a part of the amorphous magnetic alloy is substituted by another kind of magnetic substance.

Similarly, plating or other anti-corrosion treatment on a part or the whole of amorphous magnetic alloy sheet reduces none of the advantages.

## Claims

1. A tension sensor for measuring the tension of a tape-like or string-like object (62) and having a magnetic core (53) composed of a resilient and magnetostrictive amorphous alloy sheet forming a magnetic circuit and having a current-bearing sensing coil (55) wound around said magnetic core, characterised in that

said magnetic core (53) is tubular in shape and supported by supporting means (51, 52, 54) at both end portions thereof such that at least a part of said magnetic core is fixed to said support means (51, 52, 54); and

said sensing coil (55) is arranged such that magnetic flux generated therefrom is passed circumferentially through said magnetic core, and in that a part of the circumferential surface of said sheet forming the tubular magnetic core (53) is exposed so that said tape-like or spring-like object (62) is in contact therewith.

2. A tension sensor as claimed in claim 1, further comprising a former (56) having flanges (561, 562) at both ends thereof around which said coil (55) is wound so as to cross over said flanges, said magnetic core being mounted so as to pass through a slit formed by said former (56) and said coil (55).

3. A tension sensor as claimed in claim 1 or 2, wherein said supporting means (51, 52, 54) comprises:

a central column (54) positioned through an internal space of a tubular portion of said magnetic core; and

upper and lower supporting parts (51, 52) fixed to said center column (540) said magnetic core being supported between said upper and lower parts.

4. A tension sensor as claimed in claim 3, werein said upper and lower supporting parts (51, 52) have grooves (511, 521) facing each other and said end portions of said magnetic cores are respectively set in said grooves (511, 521).

## Patentansprüche

1. Spannungsfühler zum Messen der Spannung eines band- oder schnurähnlichen Gegenstands (62) mit einem magnetischen Kern (53) aus einem elastischen Blech einer magnetostriktiven amorphen Legierung, welcher einem magnetischen Kreis bildet, und mit einer um den magnetischen Kern gewickelten, stromführenden Sensorspule (55), dadurch gekennzeichnet, daß der magnetische Kern (53) von rohrförmiger Gestalt und an beiden Endstücken von Trageinrichtungen (51, 52, 54) gehalten ist, so daß wenigstens ein Teil des magnetischen Kerns an den Trageinrichtungen (51, 52, 54) befestigt ist, und daß die Sensorspule (55) so angeordnet ist, daß ein von ihr erzeugter magnetischer Fluß in Umfangsrichtung durch den magnetischen Kern fließt, und daß ein Teil der Umfangsfläche des den magnetischen Kern (53) bildenden Blechs freiliegt, so daß der band- oder schnurförmige Gegenstand (62) in Berührung damit ist.

2. Spannungsfühler nach Anspruch 1, ferner mit einem Formeinsatz (56) mit Flanschen (561, 562) an beiden Enden desselben, um welchen die Spule (55) gewickelt ist, so daß sie die Flansche überquert, wobei der magnetische Kern so angebracht ist, daß er durch einen vom Formeinsatz (56) und der Spule (55) gebildeten Schlitz hindurchtritt.

3. Spannungsfühler nach Anspruch 1 oder 2, bei welchem die Trageinrichtungen (51, 52, 54) einen einen Innenraum eines rohrförmigen Teils des magnetischen Kerns durchsetzenden mittigen Schaft (54) und am mittigen Schaft (540) befestigte obere und untere Halteteile (51, 52) aufweisen, wobei der magnetische Kern zwischen den oberen und unteren Teilen gehalten ist.

4. Spannungsfühler nach Anspruch 3, bei welchem die oberen und unteren Halteteile (51, 52) einander zugewandte Nuten (511, 521) aufweisen und die Endstücke des magnetischen Kerns in die jeweiligen Nuten (511, 521) eingesetzt sind.

## Revendications

1. Capteur de tension destiné à mesurer la tension d'un objet en forme de bande ou de câble (62) et comprenant un noyau magnétique (53) constitué par une feuille d'alliage amorphe élastique et magnétostrictive formant un circuit magnétique et comprenant une bobine de détection (55) conduisant un courant, bobinée sur ledit noyau magnétique, caractérisé en ce que ledit noyau magnétique (53) a une forme tubulaire et est supporté par un dispositif support (51, 52, 54) à ses deux parties d'extrémité, de manière qu'au moins une partie dudit noyau magnétique soit fixée sur ledit dispositif support (51, 52, 54) et ledit enroulement de détection (55) étant agencé de manière que le flux magnétique qu'il produit passe circonférentiellement dans ledit noyau magnétique et en ce qu'une partie de la surface circonférentielle de ladite feuille formant le noyau magnétique tubulaire (53) est exposée pour que ledit objet en forme de bande ou en forme de câble (62) soit en contact avec elle.

2. Capteur de tension selon la revendication 1, comportant en outre un gabarit (56) comprenant des rebords (561, 562) à ses deux extrémités, autour desquelles ledit enroulement (55) est bobiné de manière à croiser lesdits rebords, ledit noyau magnétique étant monté de manière à passer dans une fente formée par ledit gabarit (56) et ledit enroulement (55).

3. Capteur de tension selon la revendication 1 ou 2, dans lequel ledit dispositif support (51, 52, 54) comporte une colonnette centrale (54) positionnée dans un espace interne d'une partie tubulaire dudit noyau magnétique et des pièces support supérieure et inférieure (51, 52) fixées sur ladite colonnette centrale (540), ledit noyau magnétique étant supporté entre ladite pièce supérieure et ladite pièce inférieure.

4. Capteur de tension selon la revendication 3, dans lequel ladite pièce support supérieure et ladite pièce support inférieure (51, 52) comportent des rainures (511, 521) se faisant face et lesdites parties d'extrémité dudit noyau magnétique étant placées respectivement dans lesdites rainures (511, 521).

FIG. 1.

FIG. 2.

FIG. 3.

FIG. 4.

Fig. 5.

Fig. 6.

INDUCTANCE VALUE
MEASURING DEVICE

INDUCTANCE-TENSION
VALUE CONVERTER

2

FIG. 7.

FIG. 8.

FIG. 9.